# EUROPEAN PATENT APPLICATION

(11) **EP 3 125 519 A1**
(43) Date of publication of application: **01.02.2017**
(21) Application number: 15178754.6
(22) Date of filing: 29.07.2015
(51) Int. Cl.: H04N 1/32, H04N 1/00, G06F 3/12

(54) **IMAGE FORMING APPARATUS**

(71) Applicant: Kabushiki Kaisha Toshiba, Tokyo 105-8001 (JP); Toshiba TEC Kabushiki Kaisha, Tokyo 141-0032 (JP)
(72) Inventor: NOSAKI, Takefumi, Shinagawa-ku, Tokyo 141-0032 (JP)
(74) Representative: Takeuchi, Maya

(57) **Abstract**

According to an embodiment, an image forming apparatus includes a processing receiving unit, and a function module. The processing receiving unit receives image data processing of an option function from an own apparatus or another apparatus, and instructs a control unit to execute the image data processing. The function module achieves the option function.

## Description

### FIELD

Embodiments described herein relate generally to an image forming apparatus.

### BACKGROUND

An image forming apparatus such as a multi function peripheral (MFP), includes a plurality of functions such as a copying function, a scanning function and the like. Moreover, it is possible to add a function of image data processing as an option, to the MFP. There is optical character recognition (OCR), as an example of the image data processing.

In general, the cost for adding a function module of an option, is spent when an option function of the image data processing is added to the MFP. However, a frequency of use of the option function in the MFP, is not so high. Therefore, even if the option function is added to the MFP, an effect may be low with respect to the cost in a case where the option function is not efficiently used.

### DESCRIPTION OF THE DRAWINGS

FIG. 1 is an external view illustrating an example of an MFP according to an embodiment.
FIG. 2 is a diagram illustrating an example of an image forming system according to the embodiment.
FIG. 3 is a diagram illustrating an example of a configuration of the MFP according to the embodiment.
FIG. 4 is a diagram illustrating an example of a data table which is stored in a memory unit.
FIG. 5 is a diagram illustrating an example of a function module.
FIG. 6 is a diagram illustrating an example of the function module.
FIG. 7 is a diagram illustrating an example of a processing flow of the image forming system according to the embodiment.

### DETAILED DESCRIPTION

In general, according to one embodiment, an image forming apparatus includes a processing receiving unit, and a function module. The processing receiving unit receives an instruction of image data processing of an option function from an own apparatus or another apparatus, and instructs a control unit to execute the image data processing. The function module achieves the option function.

The apparatus may further comprise: a control unit configured to, when the function module is capable of executing the image data processing from the processing receiving unit and the processing receiving unit performs instruction to execute the image data processing , to control execution of image data processing by the function module based on the instruction.

The control unit may transmit a processing result of the image data processing by the function module, to the own apparatus or the another apparatus that has performed an instruction of the image data processing.

The apparatus may further comprise:a processing instruction unit configured to specify the own apparatus or the another apparatus including the function module which executes the necessary image data processing, and to instruct the processing receiving unit of the specified own apparatus or the specified another apparatus to execute the image data processing.

The apparatus may further comprise: a printing unit configured to print a processing result of image data processing transmitted from the own apparatus or the another apparatus.

The present invention further relates to an image forming system comprising: a first image forming apparatus; and a second image forming apparatus.

The first image forming apparatus includes a processing instruction unit that specifies an own apparatus or another apparatus including a function module which executes necessary image data processing, and instructs a processing receiving unit of the specified own apparatus or the specified another apparatus to execute the image data processing, and a printing unit that prints a processing result of image data processing which is transmitted from the own apparatus or the another apparatus.

The second image forming apparatus may include a processing receiving unit that receives an instruction of image data processing of an option function from the own apparatus or the another apparatus, and instructs a control unit to execute the image data processing, a function module that achieves the option function and a control unit.

The control unit of the second image forming apparatus may be configured to, when the function module is capable of executing the image data processing from the processing receiving unit, and the processing receiving unit performs an instruction to execute the image data processing, to control execution of image data processing by the function module, based on the instruction, and transmit a processing result of the image data processing by the function module, to the own apparatus or the another apparatus which performs an instruction of image data processing.

The processing instruction unit of the first image forming apparatus, may specify the second image forming apparatus including the function module that executes the necessary image data processing, and to instruct the processing receiving unit of the second image forming apparatus to execute the image data processing.

The processing receiving unit of the second image forming apparatus, may be configured to receive an instruction of the image data processing from the processing instruction unit of the first image forming apparatus, to instruct execution of the image data processing to the control unit.

The control unit of the second image forming apparatus, may control the execution of the image data processing by the function module, based on the received instruction, and transmit a processing result of the image data processing to the first image forming apparatus. The printing unit of the first image forming apparatus, may print the processing result of the image data processing that is transmitted from the second image forming apparatus.

The invention further relates to an image forming method, comprising: receiving an instruction of image data processing of an option function ; instructing to execute the image data processing, and achieving the option function.

The method may further comprise controlling execution of image data processing based on the instruction, when the image data processing is executable, and an instruction to execute the image data processing is performed.

The method may further comprise transmitting a processing result of the image data processing, to an apparatus that performs an instruction of image data processing.

The method may further comprise: specifying the apparatus including a function module that executes the necessary image data processing; and instructing the apparatus to execute the image data processing.

Hereinafter, an MFP 101 (101a, 101b, ...) as an image forming apparatus according to an embodiment, will be described with reference to drawings.

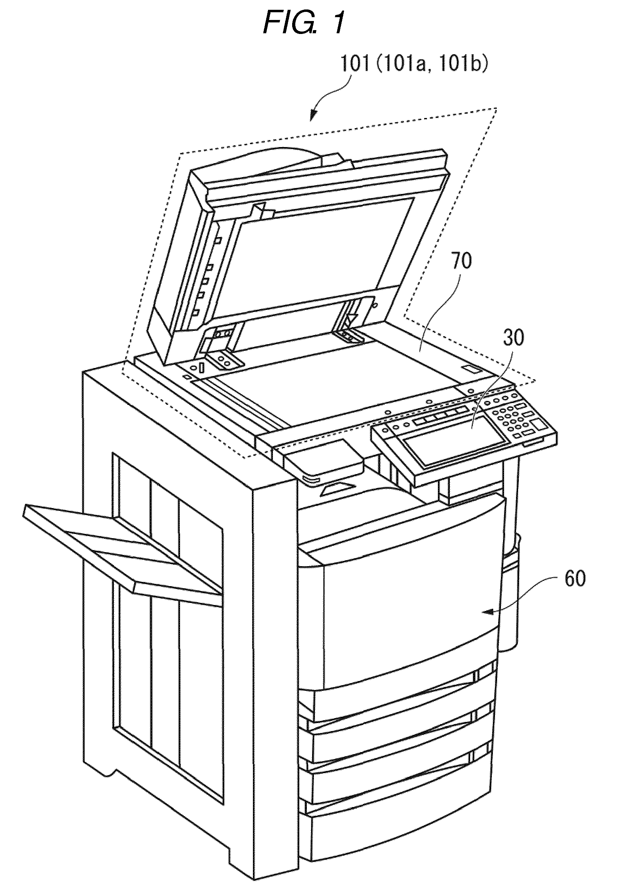

FIG. 1 is an external view illustrating an example of the MFP 101 according to the embodiment. For example, the MFP 101 is a multifunction machine. The MFP 101 generates image data (digital data) by reading an image.

The MFP 101 includes an operation panel 30, a printing unit 60, and a reading unit 70. The MFP 101 is not limited to an image forming apparatus which fixes a toner image, and may be an ink jet type image forming apparatus.

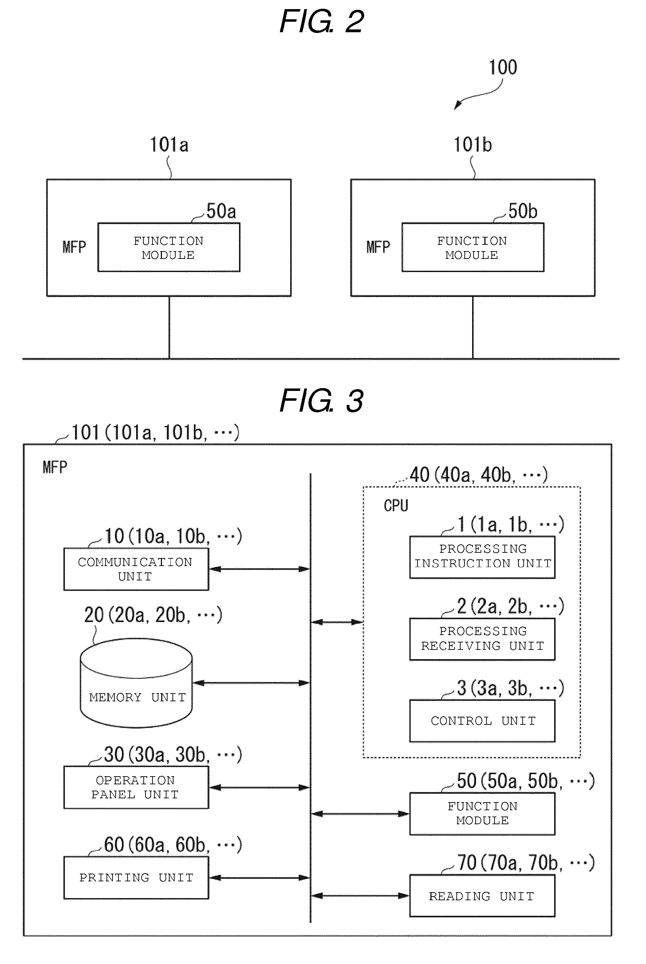

FIG. 2 is a diagram illustrating an example of an image forming system 100 according to the embodiment. The image forming system 100 according to the embodiment, includes two MFPs 101a and 101b.

The MFP 101a includes one or more function modules 50a. The MFP 101b includes one or more function modules 50b. The function modules 50a and 50b are function module which achieve different option functions. For example, the option function is an OCR function of performing the image data processing. Moreover, for example, the option function is a high-speed image processing processor function.

The MFP 101a determines whether or not the function module 50a achieves the option function of performing the necessary image data processing. The MFP 101a determines that the function module 50a achieves the option function of performing the necessary image data processing. In this case, the MFP 101a performs the necessary image data processing by using the function module 50a. Moreover, when the MFP 101a determines that it is not possible to achieve the option function of performing the necessary image data processing by the function module 50a, in order to perform the necessary image data processing by the function module 50b which may achieve the necessary image data processing, the MFP 101a transmits a processing instruction signal and an image data to the MFP 101b. The MFP 101b receives the processing instruction signal and the image data from the MFP 101a. The MFP101b performs the image data processing of the received image data corresponding to the received processing instruction signal. The MFP 101b transmits the image data after the processing to the MFP 101a. The MFP101a receives the image data after the processing from the MFP 101b.

When the necessary image data processing may not be performed by the function module 50a, by performing the processing described above, the MFP 101a operates so that an own apparatus performs the image data processing by performing the image data processing with the function module which is included in another apparatus. As a result, it is possible to share the function module 50b of the MFP 101b with the MFP 101a other than the MFP 101b. Hereby, it is possible to efficiently use the function module 50b, and it is possible to suppress the cost for adding the function module of the option, to be low.

FIG. 3 is a diagram illustrating an example of a configuration of the MFP 101 (101a, 101b, ...) according to the embodiment.

The MFP 101a includes a communication unit 10a, a memory unit 20a, an operation panel 30a, a CPU 40a, one function module 50a, a printing unit 60a, and a reading unit 70a.

The communication unit 10a performs the communication with the MFP 101 except for the MFP 101a.

The memory unit 20a stores various information that is necessary for the processing which is performed by the MFP 101a. For example, the memory unit 20a stores programs so that the CPU 40a performs various controls. Moreover, for example, the memory unit 20a stores a driver SW (software) 62a and an application SW 63a which are executed in the function module 50a. Additionally, for example, the memory unit 20a stores a data table T1 indicating a corresponding relationship between each unit of the MFP 101 and the function module which is included in each unit.

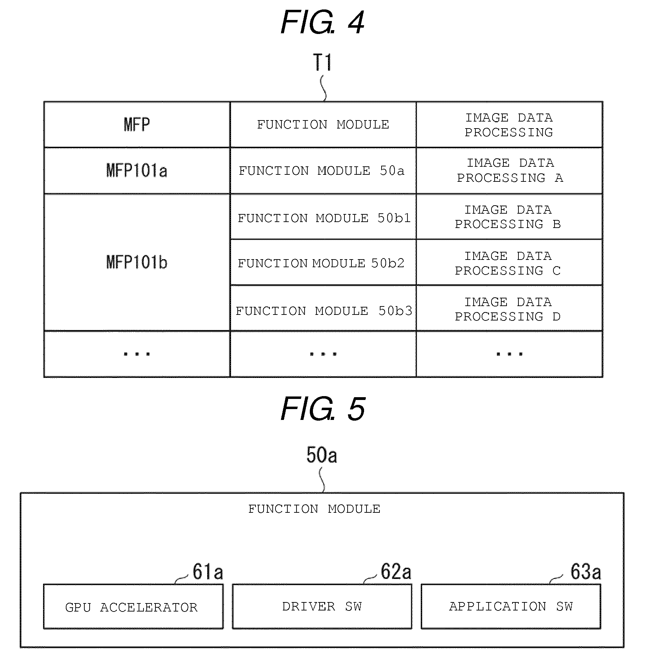

FIG. 4 is a diagram illustrating an example of the data table T1 which is stored in the memory unit 20a. In a case of the example illustrated in FIG. 4, the memory unit 20a stores the data table T1 indicating that the MFP 101a includes the function module 50a. Moreover, the data table T1 indicates that the MFP 101b includes a function module 50b1, a function module 50b2 and a function module 50b3. Furthermore, the function module 50b is a general term for the function modules 50b1, 50b2 and 50b3.

The operation panel 30a generates an operation signal corresponding to an operation which is input by a user. The operation panel 30a outputs the generated operation signal to the CPU 40a.

The CPU 40a controls various the processing which is performed by the MFP 101a. For example, the CPU 40a configures a processing instruction unit 1a, based on the program which is stored in the memory unit 20a. The processing instruction unit 1a specifies the MFP 101b including the function module which executes the necessary image data processing. Therefore, the processing instruction unit 1a instructs one function module among the function modules 50 of the specified MFP 101 to execute the necessary image data processing. Moreover, for example, the CPU 40a configures a processing receiving unit 2a, based on the program which is stored in the memory unit 20a. The processing receiving unit 2a receives the instruction of the image data processing by the function module 50a from the MFP 101. Therefore, the processing receiving unit 2a instructs a control unit 3a to control the image data processing by the function module 50a. Still more, for example, the CPU 40a configures the control unit 3a, based on the program which is stored in the memory unit 20a. The control unit 3a controls the image data processing by the function module 50a, based on the instruction from the processing receiving unit 2a. Additionally, the control unit 3a performs other controls in the MFP 101a, such as the communication of the communication unit 10a.

The function module 50a achieves the option function of the MFP 101a. FIG. 5 is a diagram illustrating an example of the function module 50a. As illustrated in FIG. 5, the function module 50a includes a GPU accelerator 61a, the driver SW (software) 62a, and the application SW 63a. Furthermore, the GPU is an abbreviation for a graphics processing unit. The driver SW 62a is a software for operating the GPU accelerator 61a. The application SW 63a is software for achieving the processing function of the image data processing. In the function module 50a, the driver SW 62a and the application SW 63a are executed. In this case, the GPU accelerator 61a operates as a function unit of performing the general-purpose image data processing, and executes the image data processing at high speed.

The printing unit 60a prints a processing result of the image data processing which is transmitted from the own apparatus or another apparatus.

The reading unit 70a reads the image information of a document which is mounted on a document table, by the control using the control unit 3a.

The MFP 101b includes a communication unit 10b, a memory unit 20b, an input unit 30b, a CPU 40b, the function module 50b, a printing unit 60b, and a reading unit 70b, in the same manner as the MFP 101a. However, the memory unit 20b stores the information which is different from that of the memory unit 20a. Moreover, the function module 50b is a function module which is different from the function module 50a.

The memory unit 20b stores various information that is necessary for the processing which is performed by the MFP 101b. For example, the memory unit 20b stores the programs so that the CPU 40b performs various controls. Moreover, for example, the memory unit 20b stores a driver SW 62b and an application SW 63b which are executed in the function module 50b1. Still more, for example, the memory unit 20b stores a driver SW 65b and an application SW 66b which are executed in the function module 50b2. Additionally, for example, the memory unit 20b stores a function object 67b and an application SW 68b which are executed in the function module 50b3. Moreover, for example, the memory unit 20b stores the data table T1 indicating the corresponding relationship between each unit of the MFP 101 and the function module which is included in each unit.

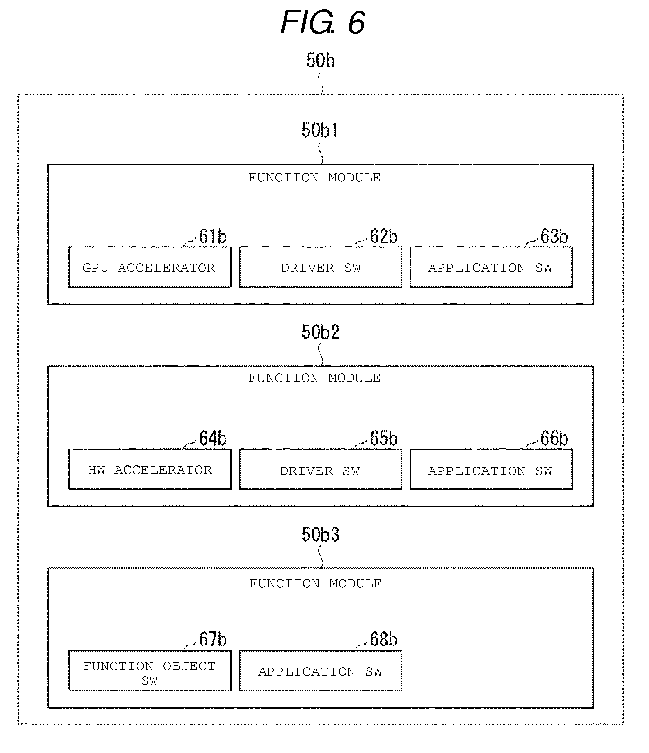

FIG. 6 is a diagram illustrating an example of the function module 50b. As illustrated in FIG. 6, the function module 50b includes the function module 50b1, the function module 50b2, and the function module 50b3. The function module 50b1 includes a GPU accelerator 61b, the driver SW 62b, and the application SW 63b. The driver SW 62b is a software for operating the GPU accelerator 61b. The application SW 63b is a software for achieving the processing function of the image data processing. In the function module 50b1, the driver SW 62b and the application SW 63b are executed. In this case, the GPU accelerator 61b operates as a function unit of performing the general-purpose image data processing, and executes the image data processing at high speed.

Moreover, the function module 50b2 includes an HW accelerator 64b, the driver SW 65b, and the application SW 66b. The driver SW 65b is a software for operating the HW accelerator 64b. The application SW 66b is a software for achieving the processing function of the image data processing. In the function module 50b2, the driver SW 65b and the application SW 66b are executed. In this case, the HW accelerator 64b operates as a function unit of performing the dedicated image data processing, and executes the image data processing at high speed.

Additionally, the function module 50b3 includes the function object SW 67b and the application SW 68b. In the function module 50b3, the function object SW 67b and the application SW 68b are executed. In this case, the CPU 40b operates as a function unit of performing the image data processing, and executes the image data processing.

Furthermore, the MFPs 101a, 101b, 101c, and ..., are collectively referred as the MFP 101. The communication units 10a, 10b, 10c, and ..., are collectively referred to as the communication unit 10. The memory units 20a, 20b, 20c, and ... , are collectively referred to as the memory unit 20. The operation panels 30a, 30b, 30c, and ..., are collectively referred to as the operation panel 30. The CPUs 40a, 40b, 40c, and ..., are collectively referred to as the CPU 40. The processing instruction units 1a, 1b, 1c, and ..., are collectively referred to as a processing instruction unit 1. The processing receiving units 2a, 2b, 2c, and ..., are collectively referred to as a processing receiving unit 2. The control units 3a, 3b, 3c, and ..., are collectively referred to as a control unit 3. The function modules 50a, 50b, 50c, and ..., are collectively referred to as the function module 50. The printing units 60a, 60b, 60c, and ..., are collectively referred to as the printing unit 60. The reading unit 70a, 70b, 70c, and ..., are collectively referred to as the reading unit 70.

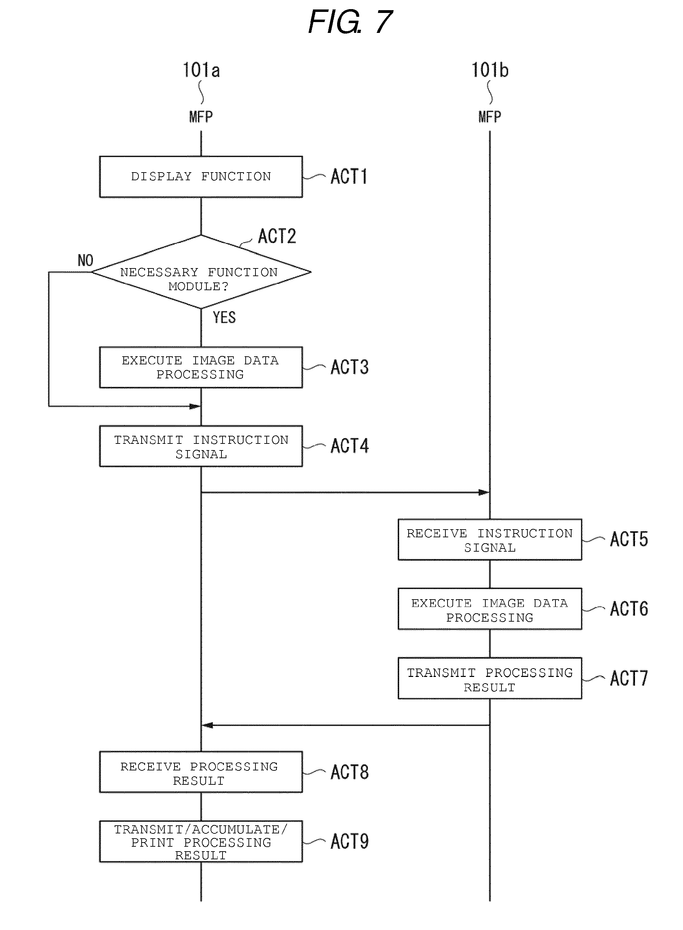

FIG. 7 is a diagram illustrating an example of a processing flow of the image forming system 100 according to the embodiment. By using FIG. 7, the processing of the image forming system 100 according to the embodiment, will be described. In the image forming system 100, a dedicated application program is previously installed in the MFP 101 (101a, 101b, ...). The dedicated application program is a program which is executed within each apparatus of the MFP 101. Here, a case of achieving an image data processing B in the MFP 101a, is described as an example.

The control unit 3a of the MFP 101a (first image forming apparatus), performs the control of displaying various functions which may be executed by the MFP 101a in the operation panel 30a. The operation panel 30a displays various functions which may be executed by the MFP 101a (ACT1). The user performs the input operation for performing the necessary image data processing B which may be achieved by the option function with respect to the MFP 101a. For example, the user performs the operation of scanning the image corresponding to an icon of the image data processing B which is displayed in the operation panel 30a. Furthermore, for example, the image data processing B is the data processing which generates a PDF file with a text by using an OCR function.

The processing instruction unit 1a which is included in the MFP 101a, reads the data table T1 from the memory unit 20a, in response to the input operation of the user. The processing instruction unit 1a determines whether or not the own apparatus includes the function module executing the image data processing B, based on the data table T1 (ACT2). For example, the necessary image data processing is assumed to be the image data processing B. In this case, the processing instruction unit 1a determines whether or not an image data processing A which is performed by the MFP 101a, corresponds with the necessary image data processing (image data processing B) in the data table T1.

The processing instruction unit 1a determines that the function module 50a includes the function module executing the image data processing B (ACT2, YES). In this case, the processing instruction unit 1a transmits the processing instruction signal of instructing the function module 50a to execute the processing, to the processing receiving unit 2a. The processing receiving unit 2a receives the processing instruction signal from the processing instruction unit 1a. The processing receiving unit 2a controls the function module 50a to perform the image data processing B, based on the processing instruction signal. The function module executes the image data processing B, based on the control by the processing receiving unit 2a (ACT3).

Moreover, the processing instruction unit 1a determines that the function module 50a does not execute the image data processing B (ACT2, NO). In this case, the processing instruction unit 1a transmits the processing instruction signal to the MFP 101b (second image forming apparatus) through the communication unit 10a (ACT4).

The processing receiving unit 2b which is included in the MFP 101b, receives the processing instruction signal from the MFP 101a (ACT5) . The processing receiving unit 2b performs the control of performing the image data processing B by the function module 50b1, based on the processing instruction signal. The function module 50b1 executes the image data processing B, based on the control by the processing receiving unit 2b (ACT6). The control unit 3b transmits the processing result of the image data processing B which is performed by the function module 50b1, to the MFP 101a through the communication unit 10b (ACT7).

The control unit 3a which is included in the MFP 101a, receives the processing result of the image data processing B from the MFP 101b through the communication unit 10a (ACT8) . The control unit 3a may send the processing result of the image data processing B to a PC of an operator through the communication unit 10a according to an input setting of the operation panel 30a, or may send the processing result of the image data processing B to a folder within a memory apparatus of another server which is not illustrated in the drawing. Moreover, the printing may be performed by controlling the printing unit 60b in another image processing (ACT9).

Furthermore, for example, the user may change the printing setting of the MFP 101 such as the setting of printing sheet size, or monochrome or color printing, by operating the operation panel 30a, before the printing.

Moreover, by making a license of sharing the function module with another apparatus, it is possible to prevent an unauthorized use.

As in the above description, the processing which is performed by the image forming system 100 is described.

In the MFP 101a, the function module 50a does not perform the image data processing B. In this case, by performing the above processing, the MFP 101a operates so that the own apparatus performs the image data processing by performing the image data processing with the function module 50b1 of another apparatus. As a result, it is possible to share the function module 50b which is included in the MFP 101b with the MFP 101 other than the MFP 101b. Hereby, it is possible to efficiently use the function module 50b of the option. Additionally, it is possible to suppress the cost for adding the function module of the option, to be low, and it is possible to concurrently obtain the effect of the image data processing by the option function in a plurality of apparatuses.

Furthermore, the user may perform the instruction of the data processing from the MFP 101a to the MFP 101b, from a portable terminal which includes the input unit, the display unit, and the communication unit, and is not illustrated in the drawing.

The memory unit 20 according to the embodiment, may be included at any spot in a range where the communication of the information is appropriately performed. Moreover, the memory unit 20 may be plurally present in the range where the communication of the information is appropriately performed, and may store the data by distributing the data.

Furthermore, the processing flow in the embodiment, may switch a sequence of the processing, in the range where the appropriately processing is performed.

Owing to the MFP 101 according to at least one embodiment described above, it is possible to efficiently use the function module of the option. Moreover, owing to the MFP 101 according to at least one embodiment described above, it is possible to suppress the cost to be low, and it is possible to obtain the effect of the image data processing by the option function.

Furthermore, in the embodiment, the MFP 101 may have a computer system on the inside thereof, in the image forming system 100 described above. A procedure of the processing described above, is stored in a recording medium which is readable by the computer, in a form of a program. The computer executes the program by reading the program, and thereby, the processing is performed. Here, as a recording medium which is readable by the computer, a magnetic disk, a magneto-optical disk, a CD-ROM, a DVD-ROM, a semiconductor memory or the like, may be used. Moreover, the computer program may be delivered to the computer by a communication line, and the computer receiving the delivery, may execute the program.

Additionally, the above program may be a program for achieving a portion of the function described above. Furthermore, the above program may be a program that may be achieved by combining the function described above with the program which is already recorded in the computer system, that is, a so-called differential file (differential program).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image forming apparatus comprising:
a processing receiving unit configured to receive an instruction of image data processing of an option function from an own apparatus or another apparatus, and instructs a control unit to execute the image data processing; and
a function module configured to achieve the option function.

2. The apparatus according to claim 1, further comprising:
a control unit configured to, when the function module is capable of executing the image data processing from the processing receiving unit and the processing receiving unit performs instruction to execute the image data processing , to control execution of image data processing by the function module based on the instruction..

3. The apparatus according to claim 2, wherein
the control unit transmits a processing result of the image data processing by the function module, to the own apparatus or the another apparatus that has performed an instruction of the image data processing.

4. The apparatus according to claim 1, further comprising:
a processing instruction unit configured to specify the own apparatus or the another apparatus including the function module which executes the necessary image data processing, and to instruct the processing receiving unit of the specified own apparatus or the specified another apparatus to execute the image data processing.

5. The apparatus according to claim 4, further comprising:
a printing unit configured to print a processing result of image data processing transmitted from the own apparatus or the another apparatus.

6. An image forming system comprising:
a first image forming apparatus; and
a second image forming apparatus which is an image forming apparatus according to any one of claims 1 to 5,
wherein the first image forming apparatus includes
a processing instruction unit that specifies an own apparatus or another apparatus including a function module which executes necessary image data processing, and instructs a processing receiving unit of the specified own apparatus or the specified another apparatus to execute the image data processing, and
a printing unit that prints a processing result of image data processing which is transmitted from the own apparatus or the another apparatus.

7. The image forming system according to claim 6, wherein the control unit of the second image forming apparatus is configured to, when the function module is capable of executing the image data processing from the processing receiving unit, and the processing receiving unit performs an instruction to execute the image data processing, to control execution of image data processing by the function module, based on the instruction, and transmit a processing result of the image data processing by the function module, to the own apparatus or the another apparatus which performs an instruction of image data processing..

8. The image forming system according to claim 6 or 7, wherein the processing instruction unit of the first image forming apparatus, specifies the second image forming apparatus including the function module that executes the necessary image data processing, and instruct the processing receiving unit of the second image forming apparatus to execute the image data processing.

9. The image forming system according to claim 8, whereinthe processing receiving unit of the second image forming apparatus, is configured to receive an instruction of the image data processing from the processing instruction unit of the first image forming apparatus, and to instruct execution of the image data processing to the control unit.

10. The image forming system according to claim 9,
wherein
the control unit of the second image forming apparatus, controls the execution of the image data processing by the function module, based on the received instruction, and transmits a processing result of the image data processing to the first image forming apparatus, and
the printing unit of the first image forming apparatus, prints the processing result of the image data processing that is transmitted from the second image forming apparatus.

11. An image forming method, comprising:
receiving an instruction of image data processing of an option function ;
instructing to execute the image data processing, and achieving the option function.

12. The method according to claim 11, further comprising controlling execution of image data processing based on the instruction, when the image data processing is executable, and an instruction to execute the image data processing is performed.

13. The method according to claim 12, comprising transmitting a processing result of the image data processing, to an apparatus that performs an instruction of image data processing.

14. The method according to any one of claims 11 to 13, further comprising:
specifying the apparatus including a function module that executes the necessary image data processing; and
instructing the apparatus to execute the image data processing.
